# EUROPEAN PATENT SPECIFICATION

(11) **EP 4 546 291 B1**
(45) Date of publication and mention of the grant of the patent: **02.12.2026**
(21) Application number: 23306851.9
(22) Date of filing: 23.10.2023
(51) Int. Cl.: G06V 20/64

(54) **METHOD AND APPARATUS FOR RECONSTRUCTING A 3D MODEL OF A USER**
VERFAHREN UND VORRICHTUNG ZUR REKONSTRUKTION EINES 3D-MODELLS EINES BENUTZERS
PROCÉDÉ ET APPAREIL DE RECONSTRUCTION D'UN MODÈLE 3D D'UN UTILISATEUR

(43) Date of publication of application: 30.04.2025
(73) Proprietor: 7 Sensing Software, 75012 Paris (FR)
(72) Inventor: AI, Di, 94000 Créteil (FR); MANCEAU, Josselin, 92220 Bagneux (FR); MARTI, Clément, 92240 Malakoff (FR)
(74) Representative: impuls legal PartG mbB

(56) References cited:
- US-A1- 2017 353 711
- US-A1- 2019 122 411
- STEPHEN LOMBARDI ET AL: "Deep Appearance Models for Face Rendering", ARXIV.ORG, CORNELL UNIVERSITY LIBRARY, 201 OLIN LIBRARY CORNELL UNIVERSITY ITHACA, NY 14853, 1 August 2018 (2018-08-01), XP080904050, DOI: 10.1145/3197517.3201401
- ZHANG YIZHE ET AL: "Random Faces Guided Sparse Many-to-One Encoder for Pose-Invariant Face Recognition", PROCEEDINGS OF THE IEEE INTERNATIONAL CONFERENCE ON COMPUTER VISION (ICCV), IEEE, 1 December 2013 (2013-12-01), pages 2416 - 2423, XP032572730, ISSN: 1550-5499, [retrieved on 20140228], DOI: 10.1109/ICCV.2013.300
- MARIGGIS IOANNIS ET AL: "Body Part Modeling on the Phone", PROCEEDINGS OF THE 7TH INTERNATIONAL CONFERENCE ON 3D BODY SCANNING TECHNOLOGIES, LUGANO, SWITZERLAND, 30 NOV.-1 DEC. 2016, 30 November 2016 (2016-11-30), pages 214 - 224, XP093171739, Retrieved from the Internet <URL:https://scholar.archive.org/work/gno5ci37bjga7fgvbrtheb4qqe/access/wayback/http://www.3dbodyscanning.org/cap/papers/2016/16214mariggis.pdf> DOI: 10.15221/16.214
- SONG LINSEN ET AL: "Everybody's Talkin': Let Me Talk as You Want", IEEE TRANSACTIONS ON INFORMATION FORENSICS AND SECURITY, IEEE, USA, vol. 17, 26 January 2022 (2022-01-26), pages 585 - 598, XP011900497, ISSN: 1556-6013, [retrieved on 20220211], DOI: 10.1109/TIFS.2022.3146783
- DENTON EMILY ET AL: "Deep Generative Image Models using a Laplacian Pyramid of Adversarial Networks", 7 December 2015 (2015-12-07), XP093172294, Retrieved from the Internet <URL:https://proceedings.neurips.cc/paper/2015/file/aa169b49b583a2b5af89203c2b78c67c-Paper.pdf>
- VASLUIANU FLORIN-ALEXANDRU ET AL: "Shadow Removal with Paired and Unpaired Learning", 2021 IEEE/CVF CONFERENCE ON COMPUTER VISION AND PATTERN RECOGNITION WORKSHOPS (CVPRW), IEEE, 19 June 2021 (2021-06-19), pages 826 - 835, XP033967517, [retrieved on 20210825], DOI: 10.1109/CVPRW53098.2021.00092

## Description

### TECHNICAL FIELD

Various example embodiments relate generally to apparatus and methods for reconstructing a 3D model of a user.

Such a model, commonly referred to as an avatar, can be used in many applications such as video conference, especially in virtual reality where the face of the users is obscured by the headset, gaming where the players can play with their face on the characters of the game, shopping (especially online) where customers can try new haircuts, glasses, makeups, etc. on their reconstructed 3D avatar.

### BACKGROUND

Reconstructing a realistic avatar from image data is currently a subject of research. A known approach is to use a neural network trained with a training dataset of 2D images of people to predict a shape of a face and a texture that match an input image.

The 2D training images are typically images of people scrapped from the internet. As there is no ground truth shape nor texture associated with such 2D training images, during training the predicted shape and texture associated with a training image are rendered into a predicted image. The predicted image is then compared with the training image, and the neural network is adjusted by gradient descent to minimize the difference between the predicted image and the training image.

After the model has been trained, at inference time, a user provides an image and the neural network computes a shape and texture for this image.

An example of such an approach can be found in the article dated 24 April 2020 "Deep 3D Portrait from a Single Image" by Sicheng Xu, Jiaolong Yang, Dong Chen, Fang Wen, Yu Deng, Yunde Jia, and Xin Tong. Furthermore, Stephen Lombardi et al. in the article dated 01 August 2018 "Deep Appearance Models for Face Rendering" disclose a data-driven pipeline for rendering human faces using a variational autoencoder (VAE) that is conditioned on a viewpoint vector. Zhang Yizhe et al. the article dated 01 December 2013 "Random Faces Guided Sparse Many-to-One Encoder" disclose a sparse many-to-one encoder scheme for face recognition across poses. For general body modeling, loannis Mariggis et al. the article dated 30 November 2016 "Body Part Modeling on the Phone" and US 2017/353711 A1 provide methods for smartphone-based scanning and acquisition guidance. Background techniques for texture blending and image generation are known from US 2019/122411 A1, Song Linsen et al. the article dated 26 January 2022 "Everybody's Talkin': Let Me Talk as You Want", and Denton Emily et al. in the article dated 07 December 2015 "Deep Generative Image Models using a Laplacian Pyramid of Adversarial Networks", particularly concerning Laplacian pyramid applications. Additionally, Florin-Alexandru Vasluianu et al. in the article dated 19 June 2021 "Shadow Removal with Paired and Unpaired Learning" describe self-supervised shadow removal with conditioned masks.

The present disclosure relates to a neural network-based approach for reconstructing a 3D model of a user which enables quick generation of a high-quality 3D model of a user, using non-specialized consumer hardware.

### SUMMARY

According to some aspects, there is provided the subject matter of the independent claims. Some further aspects are defined in the dependent claims.

According to a first aspect, a reconstruction method is disclosed for reconstructing a 3D model of a user. The reconstruction method comprises:
- providing a plurality of images, corresponding to a plurality of views of the user from a plurality of predefined angles, to a neural network to obtain reconstruction parameters for the user, the neural network being configured to apply to a given image within the plurality of images, neural network weights specialized for the predefined angle corresponding to said given image,
- reconstructing the 3D model of the user from the reconstruction parameters.

The neural network comprises a plurality of encoders and a decoder, each encoder having neural network weights specialized for a given predefined angle, and the reconstruction method comprises:
- providing each image of the plurality of images to the encoder which neural network weights are specialized for the predefined angle corresponding to said image, to generate per view features,
- providing the per view features obtained by each encoder to the decoder, to obtain the reconstruction parameters.

In some aspects, the neural network comprises at least an input layer and an output layer, the input layer being configured with a set of specialized neural network weights per predetermined angle, and the reconstruction method comprises:
- providing each image of the plurality of images to the input layer in such way that each image is processed by the input layer with the set of neural network weights specialized for the predetermined angle corresponding to said image,
- obtaining the reconstruction parameters from the output layer.

Various implementations of such a reconstruction method are disclosed which can be used alone or in combination:
- the reconstruction parameters can be morphable model parameters;
- the plurality of images can include at least a frontal image and at least one of a right and a left side image of the user;
- the angle-specialized neural network weights can be obtained by training the neural network with a training dataset comprising training images corresponding to views of one or more humans from each of the predetermined angles or from variations around each of the predetermined angles;
- the training images can comprise training images corresponding to views of one or more synthetic human.

According to second aspect, a method is disclosed for acquiring a video of a user through a device comprising a camera and a user interface. The method comprises acquiring the video while the user and the camera are in motion relative to each other, by providing positioning guidance to the user, through the user interface, so that the user can position the camera at a given distance from the user with a controlled vertical angle relative to the optical axis of the camera. Optionally the device comprises an inertial measurement unit to obtain a camera tilt, and the positioning guidance allows the user to control the camera tilt. For example, the device is a smart phone, and the video is a selfie acquired by the user.

For example, the plurality of images corresponds to a plurality of views of the user. For example, the plurality of images includes at least a frontal image and at least one of a right and a left side image of the user.

For example, the video acquisition method is used to obtain a plurality of views of the user corresponding to a plurality of predefined angles and to execute a reconstruction method as disclosed herein based on these images. However, the video acquisition method disclosed herein can be used for other purposes.

In a third aspect, a reconstruction method is disclosed which comprises:
- providing at least one image of a user to a neural network to obtain reconstruction parameters for the user, the at least one image corresponding to a view of the user from a given angle,
- deriving a mesh from the reconstruction parameters, and
- generating a texture based on at least one image of the user,
wherein generating the texture comprises:
- obtaining the position of one or more points of interest in a virtual image of the mesh viewed from the given angle,
- detecting, in the at least one image, one or more landmarks corresponding to the one or more points of interest,
- registering the at least one image on the virtual image based on said landmarks to obtain at least one registered image, and
- generating the texture from the at least one registered image.

In a fourth aspect, a reconstruction method is disclosed which comprises generating a texture from two or more images within the plurality of images, wherein generating the texture comprises:
- reprojecting the two or more registered images onto the mesh to obtain two or more reprojected images,
- defining a map of weights for each of said two or more reprojected images,
- merging the two or more reprojected images by applying the map of weights defined for each of the two or more reprojected images,
wherein for a point of the 3D model, the weight assigned for a given reprojected image is an increasing function of the alignment between a perpendicular to the 3D model at said point and the angle of view corresponding to the reprojected image. Alternatively, the weights are fixed and depend on the position of the points of the 3D model.

In an embodiment, at least one of the two or more images used for generating the texture are first registered, as disclosed in the third aspect, before being reprojected and merged.

For example, merging is performed via a Laplacian pyramid merging.

In an exemplary embodiment of the third and/or the fourth aspect of the present disclosure, generating the texture comprises removing unwanted shadows and/or highlights from one or more area of the texture.

In a fifth aspect, a training method is disclosed for training a neural network for use in a reconstruction method as disclosed herein, wherein the neural network is trained with a training dataset comprising training images corresponding to views of one or more humans from each of the predetermined angles or from variations around each of the predetermined angles.

In a first embodiment of the disclosed training method, the training images comprise training images corresponding to views of one or more synthetic human.

In a second embodiment of the disclosed training method, the training dataset comprises ground truth reconstruction parameters associated with the training images and the neural network weights are determined by minimizing a loss function with a term based on the differences between ground truth reconstruction parameters and the estimated reconstruction parameters obtained by the neural network for the training images.

In a third embodiment of the disclosed training method, the training data set comprises ground truth mesh vertices associated with the training images, and the neural network weights are determined by minimizing a loss function with a term based on the differences between the positions of the ground truth mesh vertices and of the estimated mesh vertices derived from the estimated reconstruction parameters. In a first example, a mesh vertex is associated with a position on a mesh, and the loss function has a term that applies a weighting to the difference between the positions of a given ground truth mesh vertex and of a given estimated mesh vertex, the weighting depending on the position of the given ground truth mesh vertex. In a second example, a mesh vertex is associated with one or more mesh areas, and the loss function has a term that applies a weighting to the difference between the positions of a given ground truth mesh vertex and of a given estimated mesh vertex, the weighting depending on the one or more mesh areas to which the given ground truth mesh vertex belongs.

In another aspect, a computer program product is disclosed comprising program instructions which when executed by an apparatus cause the apparatus to execute a reconstruction method or a training method as disclosed herein.

In another aspect, a computer readable medium is disclosed, comprising program instructions which when executed by an apparatus cause the apparatus to execute a reconstruction method or a training method as disclosed herein.

In another aspect, a non-transitory computer readable medium is disclosed, comprising program instructions which when executed by an apparatus cause the apparatus to execute a reconstruction method or a training method as disclosed herein.

In another aspect, an apparatus is disclosed which comprises means for implementing a reconstruction method or a training method as disclosed herein.

In another aspect, an apparatus is disclosed comprising at least one processor and at least one memory storing program instructions that, when executed by the at least one processor, cause the apparatus at least to implement a reconstruction method or training method as disclosed herein.

It will be noted that the various aspects of the disclosed reconstruction method can be implemented independently one from another.

For example, the acquisition a video, as described in relation to the second aspect of the present disclosure, can be used in any reconstruction method which requires at least one image of the user as an input. It can also be used for other purposes e.g. for identifying of a person.

Similarly, the generation of a texture as described in relation to the third and/or the fourth aspect(s) of the disclosure, can be used in any image processing method including a texture generation step.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG.1 is a schematic representation of a first exemplary embodiment of an angle-specialized neural network used in a reconstruction method as disclosed herein.
FIG.2 is a schematic representation of a second exemplary embodiment of an angle-specialized neural network used in a reconstruction method as disclosed herein.
FIG.3 is a schematic representation of a third exemplary embodiment of an angle-specialized neural network used in a reconstruction method as disclosed herein.
FIG.4 is flow chart of an example of reconstruction method using an angle-specialized neural network as disclosed herein.
FIG.5 is a schematic representation of a device for acquiring a video of a user as disclosed herein.
FIG.6 is a schematic representation of the acquisition of a video of a user as disclosed herein.
FIG.7 is flowchart of an example of a method for generating a texture for the mesh.
FIG.8 is a schematic representation of the registration and the projection steps of the method of generating a texture as disclosed with reference to FIG.7.
FIG.9 is a schematic representation of the computation of weights to be applied when merging images to generate the texture for the mesh.
FIG.10 is a schematic representation of areas used to compute a perceptual loss to train the neural network.
FIG.11 is a block diagram of an example of apparatus for implementing a reconstruction method and/or a training method as disclosed herein.

### DETAILED DESCRIPTION

Various example embodiments will now be described more fully with reference to the accompanying drawings in which some example embodiments are shown.

Detailed example embodiments are disclosed herein. However, specific structural and functional details disclosed herein are merely representative for purposes of describing example embodiments. The example embodiments may, however, be embodied in many alternate forms and should not be construed as limited to only the embodiments set forth herein. Accordingly, while example embodiments are capable of various modifications and alternative forms, the embodiments are shown by way of example in the drawings and will be described herein in detail. It should be understood, however, that there is no intent to limit example embodiments to the particular forms disclosed.

Reconstructing the face or the head of a user is the most critical and the most challenging part of reconstructing a 3D model of a user. For simplicity, the exemplary embodiments will be described below by focusing on reconstructing the face or the head of the user. This is however not limitative and the methods described herein may apply or extend to any part of a body of a user.

The present disclosure relates to reconstruction methods for reconstructing a 3D model of a user. According to a first aspect, the disclosed method is based on a neural network which generates reconstruction parameters P for a user from a plurality of input images I₁, I₂, ...Iₙ of said user (n being an integer). Each image corresponds to a specific view of the user from a specific angle of view. For example, two images can be used, including a frontal view of the user and a right or a left view of the user e.g. a ± 45° view of the user. In another example three images can be used including a frontal view, a right view and a left view of the user. The neural network is configured to apply to each image, neural network weights specialized for the predefined angle corresponding to that image. For example, the neural network is configured to process the frontal image with neural network weights which have been specialized for frontal images, the right image with neural network weights which have been specialized for + 45 ° images, and the left image with neural network weights which have been specialized for - 45 ° images. Such neural network is referred to as angle-specialized neural network in the following of the description.

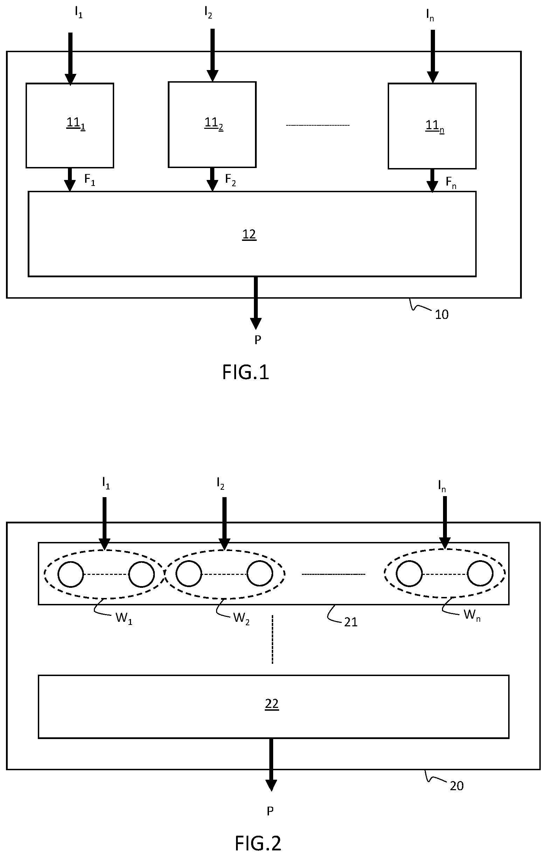

FIG.1 gives a schematic representation of a first exemplary embodiment of such an angle-specialized neural network.

The neural network of FIG.1 is referenced 10. It comprises a plurality of encoders 11₁, 11₂, 11ₙ, each encoder being configured to receive one input image I₁, I₂, ...Iₙ respectively. Each encoder is specialized for the predetermined angle associated with the input image it receives. For example, with n=3, the encoder 11₁ is specialized for processing frontal images and receives a frontal image I₁, the encoder 11₂ is specialized for processing right images and receives a right image I₂ and the encoder 11₃ is specialized for processing left images and receives a left image I₃.

As a result, each encoder generates features which are specific to the angle of view for which it has specialized. In the following of the description these features are referred to a per view features.

The per view features generated by encoder 11₁, 11₂, 11ₙ are denoted F₁, F₂, ..., Fₙ. They are provided as input to a decoder 12 of the neural network which constitutes a common backbone. The decoder 12 generates the reconstruction parameters P from the per view features F₁, F₂, ..., Fₙ.

FIG.2 gives a schematic representation of a second exemplary embodiment of an angle-specialized neural network.

The neural network of FIG.2 is referenced 20. It comprises at least one input layer 21 configured to receive all input images I₁, I₂, ...Iₙ and an output layer 22 which delivers the reconstruction parameters P. The input layer 21 is configured with a set of specialized neural network weights per predetermined angle to be processed. For example, if n=3, the input layer has a first set of neural network weights W₁ specialized for frontal images, a second set of neural network weights W₂ specialized for right images, and a third set of neural network weights W₃ specialized for left images. Each input image is processed by the input layer with the set of neural network weights specialized for the angle of view corresponding to that image. Using the above example, the first set of specialized neural network weights W₁ is used to process the frontal image I₁, the second set of specialized neural network weights W₂ is used to process the right image I₂ and the third set of specialized neural network weights W₃ is used to process the left image I₃.

For convolutional neural network however, the drawback of using a single-branch neural network as described with reference to FIG.2, is that the first layers of the network will look at pixels at the same location in the front and side views, which is not useful since e.g. the location of the nose in the side view can correspond to background image pixels in the front view. This drawback is eliminated when using separate branches as disclosed with reference to FIG.1.

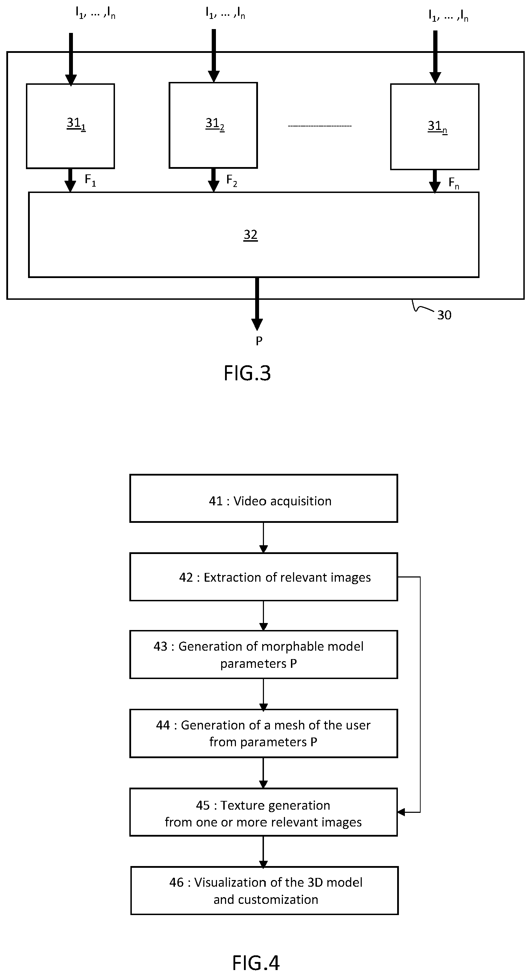

In another exemplary embodiment depicted in FIG.3, the angle-specialized neural network comprises several branches 31₁, 31₂, ..., 31ₙ and all branches receive all input images I₁, ..., Iₙ whatever the angle of view of the images. In this case, the learning rate is adjusted during training so that the learning rate for a branch is increased when the branch receives an image with an angle of view for which it shall specialize. An advantage of this implementation is that it limits the performance degradation when the gap with the theorical predefined angles increases.

The reconstruction parameters P obtained by the angle-specialized neural network are used for reconstructing the 3D model of the user.

For example, when implementing a Neural Radiance Field (NeRF) reconstruction method, the reconstruction parameters P provided by the angle-specialized neural network can be features, associated with each point in the 3D space, from which an opacity and a color can be derived which depend on the angle of view.

In another example, the reconstruction parameters P can be 3D points describing a mesh of the user in the 3D space.

In another example, the reconstruction parameters P can be morphable model parameters (such as width between the eyes, width of the nose, etc) which need to be applied to a predefined morphable model to derive a mesh of the user.

An exemplary reconstruction method using an angle-specialized neural network will now be described with reference to FIG.4. The reconstruction method depicted in FIG.4 comprises a step 41 of acquiring a video of the user, a step 42 of extracting a plurality of relevant images from the acquired video, a step 43 of applying the relevant images to an angle-specialized neural network configured to provide reconstruction parameters P which, in this exemplary embodiment are morphable model parameters, a step 44 of deriving a mesh of the user from the morphable parameters P, and a step 45 of generating a texture for the mesh to obtain a 3D model of the user. The method can also comprise a step 46 of visualizing and customizing the 3D model obtained at step 45.

The mesh derived at step 44 is typically a set of vertices and edges which define small surfaces, for example triangles. The step 45 of generating a texture for the mesh consists in filling in each surface of the mesh with appropriate color values. The texture consists in an image file, the pixels of which are used to fill color values inside the triangles of the mesh. The correspondence between the image and mesh is done through a UV map..

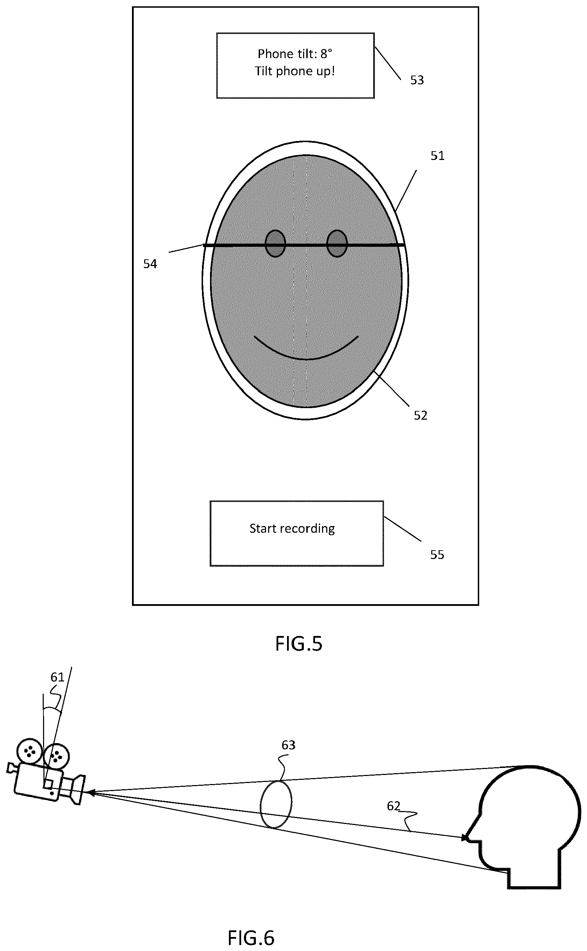

A method of acquiring a video of the user will now be described with reference to FIG.5 and FIG.6. It will be understood that this method can be implemented at step 41 of the reconstruction method disclosed with reference to FIG.4 or in any other method which requires the acquisition of a video of the user.

The disclosed method of acquiring the video of a user has been designed to allow the acquisition of the video through a conventional user device like a smart phone equipped with a camera and an inertial measurement unit. An exemplary use case is for the user to open an application which invites the user to shoot a selfie video, and uses the selfie video to generate an avatar that will be used by the application (e.g. game or video conference), or by another application.

With the disclosed method, the video of the user can be acquired by the user taking the selfie with his/her smartphone front camera (also known as selfie or user-facing camera). During recording the selfie video, the user needs to turn his/her face to the left and/or to the right so that the video includes a plurality of views of the user from a plurality of angle of views. To ensure a good enough quality of the video for the purpose of obtaining the reconstruction parameters P, the disclosed video acquisition method includes providing positioning guidance to the user so that the camera is positioned at a proper distance from the user and/or with a proper camera angle. The objective is to ensure that the user holds the camera upright in front of his/her face at a distance so that the face of the user isn't distorted (if the camera is too close to the user, the sides of the head are not visible which introduces a distortion). Controlling the position of the camera relative to the user eliminates the problem of telling apart what is due to the shape of the face and what is due to the perspective effect of having the camera too close or too far.

FIG.5 is a schematic representation of a user interface of a user device configured to provide positioning guidance to the user so that the camera is positioned at a proper distance from the user with a proper vertical angle relative to the optical axis of the camera. In the example of FIG.5, this positioning guidance is displayed on a screen of the device. It takes the form of a box 51 (e.g. an oval, or any other template representing a head) overlaid on the user video, in which the head 52 of the user shall fit. When the user device comprises an inertial measurement unit, the camera tilt can be measured and the user interface advantageously comprises a tilt indicator 53 (e.g. an air bubble level) which indicates whether the device shall be tilted up or down. For example, a horizontal line 54 can be displayed in the oval 51 to help the user align his/her eyes horizontally. In addition, a start recording button 55 can be displayed in greyed out form when any of the distance, the vertical angle and the camera tilt are not correct. For example, video recording can only start if the tilt angle of the camera is small enough, typically 5°. In the example depicted in FIG.4, the tilt angle is 8° and the user is guided by the tilt indicator 53 to tilt the device up to get closer to the 5° threshold.

The size of the oval 51 is computed based on the characteristics of the camera.

The height and the width of the oval 51 can be computed based on the focal distance f, the pixel size p and the instantaneous field of view φ of the camera. The instantaneous field of view depends on the focal distance and is defined as the angle covered by one single pixel of size p so that tan(*φ*) = *p*/*f*. The pixel size p and the instantaneous field of view φ of a given camera are known. For example, they can be retrieved from a database.

Assuming a standard height H of the head and a distance d between the camera and the head, the angle corresponding to half of the height of the face is θ, with tan(*θ*) = *H*/2*d*. The height h of the oval 51 to be overlaid on the video, in number of camera pixels, can be obtained as h=2θ/φ. This simplifies to h = Hf/(p.d)

The same applies to the width. Assuming a standard width B of the head and a distance d between the camera and the head, the angle corresponding to half of the width of the face is *ρ,* with tan (*ρ*) *= B*/2*d.* The width b of the oval 51 to be overlaid on the video, in number of camera pixels, can be obtained as b = 2ρ/ φ. This simplifies to b = Bf/(p.d)

FIG.6 is a schematic representation of a camera shooting a video of the user with a controlled camera tilt 61, a controlled distance and a controlled vertical angle of the user relative to the vertical axis 62 of the camera, and a computed oval 63 in which the head of the user fits. The center of the oval shall correspond to the center of the image of the user, on the optical axis 62 of the camera, perpendicular to the screen of the device. The user shall fit its head into the computed oval 63 with a vertical angle around 0° relative to the optical axis of the camera, and a tilt angle of the camera around 0°.

After the user video has been acquired, the reconstruction method described with reference to FIG.4 executes the step 42 of extracting a plurality of images from the acquired video to obtain input images corresponding to a plurality of views of the user from a plurality of predefined angles. For example, three images are extracted corresponding to a frontal view of the user, a 45° right view of the user and a 45° left view of the user. Identifying the relevant views can be done by extracting facial landmarks on each video frame, and selecting the video frames where the position of the landmarks is optimal. For example, for the front view, a video frame is selected wherein the distance between the eyes in the image is maximal. And for a 45° view, a video frame is selected wherein the distance between the eyes in the image is reduced by a factor cos(45°) compared with this maximal value. Alternatively, templates for landmarks can be manually defined for the front view and the 45° sides views. And the selected video frame is the one that minimizes the average distance of the image landmarks to the template defined for this view.

The extraction step 42 can be realized using a known head pose estimation solution, for example the MMPose open-source toolbox for pose estimation. Information about MMPose can be found at https://github.com/open-mmlab/mmpose.

Once extracted, the plurality of input images is provided to the angle-specialized neural network at step 43. In practice each image corresponds to 3 channels: red, green and blue. Therefore, if n images are passed as input to the neural network, the neural network receives 3n channels. Alternatively, for smartphones equipped with a depth sensor, a fourth channel representing the depth, can be used, resulting in the neural network receiving 4n channels.

At step 43, the neural network delivers morphable model parameters P from the plurality of input images. At step 44, the morphable parameters P are applied to a predefined morphable model to derive a mesh of the user. In other words, the shape of the user is estimated by the angle-specialized neural network as a set of parameters describing the user (such as width between the eyes, width of the nose, etc) rather than as a set of points in the 3D space). The estimated parameters P are transformed into points in the 3D space in a second step (step 44) by applying the predefined morphable model. This two-steps approach ensures that any set of parameters produced by the neural network eventually results in a plausible face. It makes the training of the neural network easier. For example, deriving the user mesh from the morphable parameters P can be achieved by using FLAME 3DMM, a description of which can be found at https://flame.is.tue.mpg.de/

At step 45, a texture is applied to the mesh. Advantageously, the texture is generated from one or more of the plurality of images of the user which have been extracted at step 32 from the acquired video. The one or more images of the user which are used for generating the texture, are referred to as real images in the following of the description, as they do not pass through the angle-specialized neural network. Generating the texture from one or more real images of the user allows to capture fine details of the user (like wrinkles, beauty spots, or even precise makeup) without requiring a very large neural network.

An alternative solution for generating a texture is to run a second neural network jointly with the above-described angle-specialized neural network, the second neural network outputting a texture in parallel to the angle-specialized neural network outputting the morphable parameters. For example, the second neural network predicts texture weights that are used to recombine a set of existing textures. A single neural network can also jointly predict shape and texture. However, this alternative solution can only produce smooth outputs and thus does not capture the finest details.

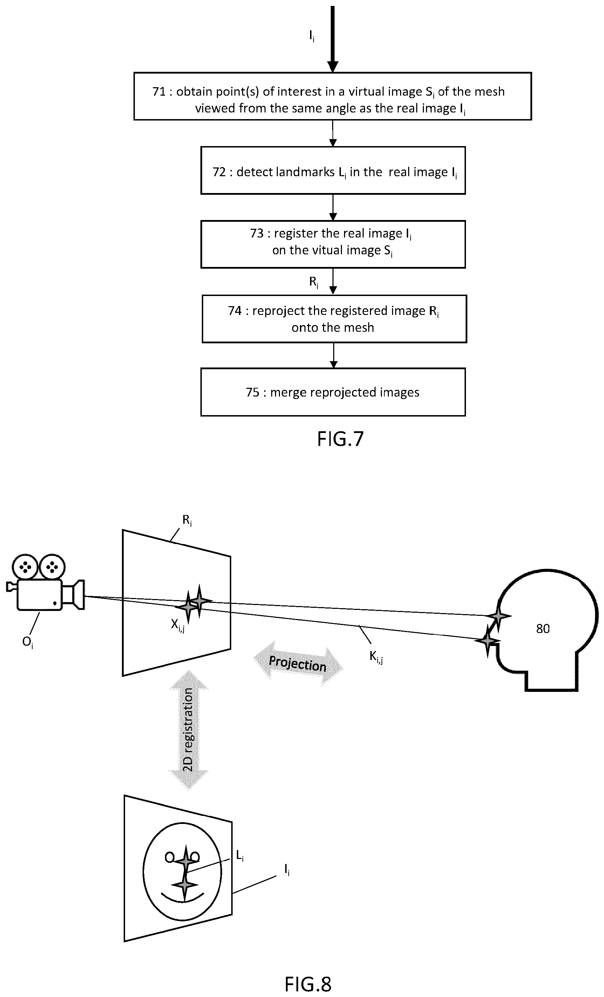

A method of generating a texture based on one or more real images of the user will now be described with reference to FIG.7. It will be understood that this method can be implemented at step 45 of the reconstruction method disclosed with reference to FIG.4 or to any other method which requires the generation of a texture.

The method depicted in FIG.7 uses one or more real images of the user, denoted Iᵢ (i = 1, ....m), where m is an integer and can be different from n). The method comprises for each real image Iᵢ a step 71 of obtaining the position of one or more points of interest in a virtual image Sᵢ of the mesh viewed from the same angle of view as the real image Iᵢ. For example, the one or more points of interest correspond to the nose and/or the eyes. The method further includes a step 72 of detecting landmarks Lᵢ in the real image Iᵢ, corresponding to the points of interest, and a step 73 of registering the real image Iᵢ on the virtual image Sᵢ based on the detected landmarks Lᵢ. At step 74, a texture is applied to the mesh by reprojecting each of the m registered images Rᵢ, i=1, ..., m onto the mesh.

The step 74 of reprojecting the registered images Rᵢ onto the mesh is illustrated in FIG.8. As described above, the real image Iᵢ is first registered on the virtual image Sᵢ based on the landmarks Lᵢ. The registered image Rᵢ corresponds to a given position Oᵢ of the camera relative to the user. The texture is applied to the mesh 80 by drawing a line K_{i,j} between the camera position Oᵢ and a point X_{i,j} in the registered image Rᵢ, and by applying the color value at point X_{i,j} in the registered image Rᵢ to the point of intersection of the line K_{i,j} and the mesh 80.

The registration step provides improved results as it corrects for inaccuracy in shape or head pose estimation. However, it will be understood that registering the real images onto the virtual images to obtain the texture is not required. It is possible to generate the texture directly from one or more real images. It is also possible to register only part of the real images contributing to the texture, for example the real image corresponding to the frontal view.

Advantageously, at step 75, when m >1, the reprojected images are merged. Merging allows to blend the reprojected images smoothly and avoid artifacts at the seams (if several projected images have pixel values for same part of the face, without blending the pixel values will be added which will create edge effects in the 3D model). For example, merging can be done by applying Laplacian pyramid merging.

In Laplacian pyramid merging, a weighting is applied to each reprojected image. This can be done by defining a map of merging weights for each of the reprojected images and by applying said maps of merging weights when merging. For example, the map of merging weights can be made of handcrafted fixed preset merging weights. Alternatively, the merging weights are computed so that a point of an image is given more or less importance when generating the texture, depending on the alignment between the angle of view of that image and the normal to the surface of the mesh at that point.

For example, for a point of the 3D model, the merging weight assigned for a reprojected image is an increasing function of the alignment between a perpendicular to the 3D model at said point and the angle of view corresponding to the reprojected image.

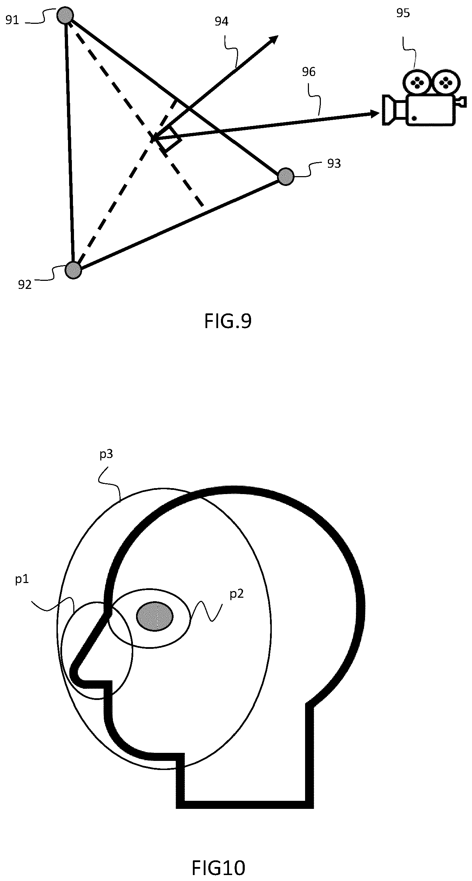

An example of computation of merging weights will now be described with reference to FIG.9.

As depicted in FIG.9, the surface of the mesh corresponding to each texture pixel is determined. This surface is delimited by three vertices 91, 92, 93 and edges between the three vertices. The normal vector 94 perpendicular to this surface and facing outwards is computed. For a given reprojected image, i.e. for a given position of the camera 95, a unit vector 96 going from the center of the surface towards the position of the camera is also computed. The merging weight assigned to that image for that texture pixel is obtained from the dot product of these two vectors. It will be understood that any other formula can be used which assigns a high value to the merging weight when the two vectors are aligned, and a value close to zero when they are perpendicular. Advantageously, surfaces facing away from the camera, and those occluded by other surfaces, are not filled in with texture.

In an embodiment, the reconstruction method further comprises additional processing steps, implemented at step 45, for example to correct the ambient lighting and create an albedo texture as if it was taken with uniform lighting. To do so the hardest shadows are removed (especially the strong linear shadows that disappear with changes of expression like eyelid shadow and the shadow between the lips). Since all the textures correspond to the same geometry, the positions of the eyelids and lips in the texture are known. Masks can be created around those positions to perform a shadow-removing operation affecting only these masks, such as blurring with a gaussian filter, or inpainting these areas. In addition, or alternatively, highlights can be removed. Highlights correspond to specular reflections. They can be detected by identifying saturated pixels in the image. Saturated pixels can be replaced with color of pixels located around the satured pixel.

Finally, the reconstruction method can include a step 46 of customization and/or animation of the reconstructed avatar. The reconstructed 3D avatar can be customized with different haircuts, hair colors, eye color, skin color, head wear (hats, helmets, glasses), makeups. The reconstructed 3D avatar is rigged and can be animated. For example, the 3D avatar's facial expression can be animated and driven by a real time video of a person.

The reconstruction method described above with reference to FIG.4 has several advantages.

Compared to neural network-based reconstruction methods that do not use neural network weights specialized for each view, the disclosed method solves a less general problem and thus allows for a better computation vs. performance tradeoff (when the angles of view are not predefined, the same weight applies to all angles). In addition, the disclosed method allows for using different neural network architectures for the front and the side view encoders which means that each encoder can be optimized for its specific angle of view (which is not possible when the angles of view are not predefined).

Also, using a plurality of images to reconstruct a 3D model of a user is advantageous. Indeed, with a single image, changes in the direction towards/away from the camera have little impact on the image and, therefore are hard to estimate. It introduces ambiguity in the shape. Using a single image also creates problems with the texture, that needs to be extrapolated for the unseen areas of the face.

Another advantage of the disclosed method is that it doesn't require high-quality nor high-resolution input images to see fine details like the skin pores. It gives satisfactory results with a standard video acquired by a conventional user device like a smartphone. A single camera can be used. Using a depth sensor is not required.

Another advantage is that can provide a 3D model of the user in any conventional format commonly used in computer graphics so that the reconstructed 3D model can be easily used by most applications (e.g. games, videoconference, etc.). It is easy to integrate in common 3D rendering engines.

Another advantage is that the 3D user model can be generated quickly typically in about 1mn. This has a key impact on the user experience, as waiting 1mn is usually acceptable and doesn't disrupt the workflow of the user (for example to launch a game).

A training method will now be described for training the angle-specialized neural network. The angle-specialized neural network as disclosed above is trained with a training dataset comprising training images corresponding to views of one or more humans from each of the predetermined angles, or from variations around each predetermined angle. Advantageously, the training images comprise training images corresponding to views of one or more synthetic human. It can be fully constituted by views of one or more synthetic human or it can comprise views of one or more synthetic human and views of one or more real human.

Views of synthetic humans can be obtained by using a 3D rendering algorithm: a human can be chosen and configured with morphable parameters, skin texture, accessories, environment to obtain an image. When creating the image, the position of the virtual camera (distance and angle of the virtual camera) can be controlled as necessary to obtain an image with the required angle of view.

The use of views of synthetic humans allow to control the angle of view and ensure that the training images correspond to the predetermined angles which are necessary to train the neural network and obtain an angle-specialized neural network. Obtaining the same result with real images is possible although much more costly.

Also, with views of synthetic humans, ground truth information about the shape is available, for example ground truth reconstruction parameters or ground truth mesh vertices. Therefore, new loss functions can be used to have the neural network converge, as will be further described below.

In a first embodiment of the training method, the training dataset comprises ground truth reconstruction parameters associated with the training images. The neural network weights are determined by minimizing a loss function that has a term based on the differences between ground truth reconstruction parameters and estimated reconstruction parameters obtained by the neural network for the training images.

The losses on the reconstruction parameters (for example the morphable model parameters) have the drawback that they are less interpretable. Actually, all reconstruction parameters don't have the same importance. Some makes little visible difference. The risk is to obtain a good loss which doesn't correspond to the reality of resemblance. Therefore, a second embodiment is disclosed which can be used as an alternative to the first embodiment or in combination with the first embodiment.

In the second embodiment of the training method, the training dataset comprises ground truth mesh vertices associated with the training images, and the neural network weights are determined by minimizing a loss function that has a term based on the differences between the positions of the ground truth mesh vertices and of the estimated mesh vertices derived from the estimated reconstruction parameters.

The losses on the 3D position of the vertices allow easier interpretation, but may not correlate completely with the reconstruction accuracy as perceived by a human. For instance, a human is more sensitive to errors on the nose and the eyes than on flat areas of the cheeks or even the back of the head. To improve the results a loss weighting factor is introduced with higher loss weight on specific vertices to correlate better with human perception.

In a first example, the loss function has a term that applies a loss weighting to the difference between the ground truth mesh vertex and the estimated mesh vertex, with the loss weighting depending on the position of the vertex on the ground truth mesh vertex on the mesh.

In a second example, areas are defined on the mesh, the mesh vertices are associated with one or more mesh areas, and the loss function has a term that applies a loss weighting to the difference between the positions of the ground truth mesh vertex and of the estimated mesh vertex, with the loss weighting depending on the one or more mesh areas to which the ground truth mesh vertex belongs. In this second example the loss function "Perceptual 3D Loss" can be expressed as: $\begin{matrix}Perceptual 3 D Loss \\ = {\sum }_{areas p} {\sum }_{vertices q} loss weight \left(p, q\right) . loss \left[ground thruth\left(v\right)-estimation\left(v\right)\right]\end{matrix}$

FIG.10 gives an example of three such areas: p1 defined around the nose, p2 around the eyes and p3 for the face of the head. In this example, areas p1 and p2 are included in area p3.

The above description of the training method focusses on the training part, during which the training data comprised in the training data set are used to calculate the loss and optimize the weights of the neural network. It will be noted that, the training dataset also comprises validation data which are used to validate the result of the training and decide when to stop training.

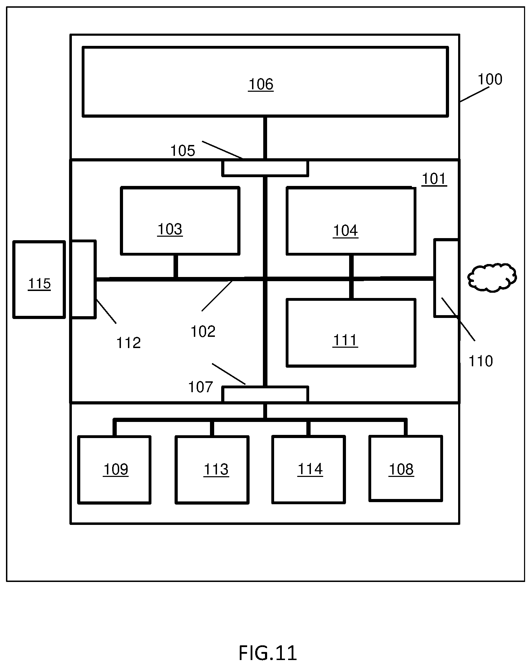

FIG.11 depicts a high-level block diagram of an apparatus 100 suitable for implementing various aspects of the disclosure. Although illustrated in a single block, in other embodiments the apparatus 100 may also be implemented using parallel and distributed architectures. Thus, for example, various steps such as those illustrated in the methods described above by reference to FIG.1 to 10 may be executed using apparatus 100 sequentially, in parallel, or in a different order based on particular implementations.

According to an exemplary embodiment, depicted in FIG.11, apparatus 100 comprises a printed circuit board 101 on which a communication bus 102 connects a processor 103 (e.g., a central processing unit "CPU"), a random access memory 104, a storage medium 111, possibly an interface 105 for connecting a display 106, a series of connectors 107 for connecting user interface devices or modules such as a mouse or trackpad 108 and a keyboard 109, a wireless network interface 110, a wired network interface 112, a camera 113, an inertial measurement unit 114. Depending on the functionality required, the apparatus may implement only part of the above. For example, an apparatus which executes the training method as disclosed herein may not require a camera 113 and an inertial measurement unit 114. And mobile device executing the reconstruction method as disclosed above may not require a mouse 108, a keyboard 109, a wired network interface 112. Certain modules of FIG.10 may be internal or connected externally, in which case they do not necessarily form integral part of the apparatus itself. E.g. display 106 may be a display that is connected to the apparatus only under specific circumstances, or the apparatus may be controlled through another device with a display, i.e. no specific display 106 and interface 105 are required for such an apparatus. Memory 111 contains software code which, when executed by processor 103, causes the apparatus to perform the methods described herein. Memory 111 can also store the angle-specialized neural network used in the execution of the reconstruction method. In an exemplary embodiment, a detachable storage medium 115 such as a USB stick may also be connected. For example, the detachable storage medium 115 can hold the software code to be uploaded to memory 111.

The processor 103 may be any type of processor such as a general-purpose central processing unit ("CPU") or a dedicated microprocessor such as an embedded microcontroller or a digital signal processor ("DSP").

In addition, apparatus 100 may also include other components typically found in computing systems, such as an operating system, queue managers, device drivers, or one or more network protocols that are stored in memory 111 and executed by the processor 103.

Although aspects herein have been described with reference to particular embodiments, it is to be understood that these embodiments are merely illustrative of the principles and applications of the present disclosure. It is therefore to be understood that numerous modifications can be made to the illustrative embodiments and that other arrangements can be devised without departing from scope of the disclosure as determined based upon the claims.

For example, the data disclosed herein may be stored in various types of data structures which may be accessed and manipulated by a programmable processor (e.g., CPU or FPGA) that is implemented using software, hardware, or combination thereof.

It should be appreciated by those skilled in the art that any block diagrams herein represent conceptual views of illustrative circuitry embodying the principles of the disclosure. Similarly, it will be appreciated that any flow charts, flow diagrams, state transition diagrams, and the like represent various processes which may be substantially implemented by circuitry.

Each described function, engine, block, step can be implemented in hardware, software, firmware, middleware, microcode, or any suitable combination thereof. If implemented in software, the functions, engines, blocks of the block diagrams and/or flowchart illustrations can be implemented by computer program instructions / software code, which may be stored or transmitted over a computer-readable medium, or loaded onto a general purpose computer, special purpose computer or other programmable processing apparatus and / or system to produce a machine, such that the computer program instructions or software code which execute on the computer or other programmable processing apparatus, create the means for implementing the functions described herein.

In the present description, block denoted as "means configured to perform ..." (a certain function) shall be understood as functional blocks comprising circuitry that is adapted for performing or configured to perform a certain function. A means being configured to perform a certain function does, hence, not imply that such means necessarily is performing said function (at a given time instant). Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

As used herein, the term "and/or," includes any and all combinations of one or more of the associated listed items.

When an element is referred to as being "connected," or "coupled," to another element, it can be directly connected or coupled to the other element or intervening elements may be present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

## Claims

1. A reconstruction method for reconstructing a 3D model of a user comprising:
- providing a plurality of images, corresponding to a plurality of views of the user from a plurality of predefined angles, to a neural network to obtain reconstruction parameters for the user, the neural network being configured to apply to a given image within the plurality of images, neural network weights specialized for the predefined angle corresponding to said given image;
wherein the neural network comprises a plurality of encoders and a decoder, each encoder having neural network weights specialized for a given predefined angle, the method comprising:
- providing each image of the plurality of images to the encoder which neural network weights are specialized for the predefined angle corresponding to said image, to generate per view features, and
- providing the per view features obtained by each encoder to the decoder, to obtain the reconstruction parameters; and
- reconstructing the 3D model of the user from the reconstruction parameters.

2. A reconstruction method as claimed in claim 1, comprising:
- acquiring a video of the user through a device comprising a camera and a user interface, the camera having an optical axis, the user and the camera being in motion relative to each other during the acquisition of the video, the device being configured to provide positioning guidance, through the user interface, to position the camera at a given distance from the user with a controlled vertical angle relative to the optical axis of the camera and/or with a given camera tilt, the camera tilt being obtained from an inertial measurement unit of the camera,
- extracting the plurality of images from the video.

3. A reconstruction method as claimed in claim 1 or 2, comprising deriving a mesh from the reconstruction parameters and generating a texture based on at least one image of the plurality of images, the at least one image corresponding to a given predefined angle, wherein generating the texture comprises:
- obtaining the position of one or more points of interest in a virtual image of the mesh viewed from said given predefined angle,
- detecting, in the at least one image, one or more landmarks corresponding to the one or more points of interest, and registering the at least one image on the virtual image based on said landmarks, to obtain at least one registered image,
- generating the texture from the at least one registered image.

4. A reconstruction method as claimed in claim 3, wherein the texture is generated from two or more images within the plurality of images, including at least one registered image, and generating the texture further comprises:
- reprojecting the two or more images onto the mesh to obtain two or more reprojected images,
- defining a map of merging weights for each of the two or more reprojected images,
- merging the two or more reprojected images by applying the map of merging weights defined for each of the two or more reprojected images,
wherein for a point of the 3D model, the merging weight assigned for a given reprojected image is :
- either predefined depending on the position of the point on the 3D model, or
- obtained as an increasing function of the alignment between a perpendicular to the 3D model at said point and the angle of view corresponding to the reprojected image.

5. A reconstruction method as claimed in claim 1 or 2, comprising generating a texture from two or more images within the plurality of images, wherein generating the texture comprises:
- reprojecting the two or more images onto the mesh to obtain two or more reprojected images,
- defining a map of merging weights for each of the two or more reprojected images,
- merging the two or more reprojected images by applying the map of merging weights defined for each of the two or more reprojected images,
wherein for a point of the 3D model, the merging weight assigned for a given reprojected image is :
- either predefined depending on the position of the point on the 3D model, or
- obtained as an increasing function of the alignment between a perpendicular to the 3D model at said point and the angle of view corresponding to the reprojected image.

6. A reconstruction method as claimed in any of claims 4 or 5, wherein merging is performed via a Laplacian pyramid merging.

7. A reconstruction method as claimed in any of claims 3 to 6, wherein generating the texture comprises removing unwanted shadows and/or highlights from one or more area of the texture.

8. A reconstruction method as claimed in any of claims 1 to 7, wherein the specialized neural network weights are obtained by training the neural network with a training dataset comprising training images corresponding to views of one or more humans from each of the predetermined angles or from variations around each of the predetermined angles.

9. A reconstruction method as claimed in claim 8, wherein the training images comprise training images corresponding to views of one or more synthetic human.

10. A training method for training a neural network for use in a reconstruction method as claimed in any of claims 1 to 7, wherein the neural network is trained with a training dataset comprising training images corresponding to views of one or more humans from each of the predetermined angles or from variations around each of the predetermined angles.

11. A training method as claimed in claim 10, wherein the training images comprise training images corresponding to views of one or more synthetic human.

12. A training method as claimed in any of claims 10 or 11, wherein the training dataset comprises ground truth reconstruction parameters associated with the training images and the neural network weights are determined by minimizing a loss function with a term based on the differences between ground truth reconstruction parameters and estimated reconstruction parameters obtained by the neural network for the training images.

13. A training method as claimed in any of claims 10 to 12, wherein the training data set comprises ground truth mesh vertices associated with the training images, and the neural network weights are determined by minimizing a loss function with a term based on the differences between the positions of the ground truth mesh vertices and of the estimated mesh vertices derived from the estimated reconstruction parameters.

14. A training method as claimed in claim 13, wherein a mesh vertex is associated with a position on a mesh, and the loss function has a term that applies a loss weighting to the difference between the positions of a given ground truth mesh vertex and of a given estimated mesh vertex, the loss weighting depending on the position of the given ground truth mesh vertex.

15. A training method as claimed in claim 13, wherein a mesh vertex is associated with one or more mesh areas, and the loss function has a term that applies a loss weighting to the difference between the positions of a given ground truth mesh vertex and of a given estimated mesh vertex, the loss weighting depending on the one or more mesh areas to which the given ground truth mesh vertex belongs.

16. A reconstruction method as claimed in any of claims 1 to 9, or a training method as claimed in any of claims 10 to 1, wherein the reconstruction parameters are morphable model parameters.

17. A computer program product comprising program instructions which when executed by an apparatus cause the apparatus to execute a reconstruction method as claimed in any of claims 1 to 10 or 16, or a training method as claimed in any of claims 10 to 16.

18. An apparatus comprising means for implementing a reconstruction method as claimed in any of claims 1 to 10 or 16, or the training method as claimed in any of claims 10 to 16.

## Patentansprüche

1. Rekonstruktionsverfahren zum Rekonstruieren eines 3D-Modells eines Nutzers, umfassend:
- Bereitstellen einer Vielzahl von Bildern, die einer Vielzahl von Ansichten des Nutzers aus einer Vielzahl von vordefinierten Winkeln entsprechen, an ein neuronales Netz, um Rekonstruktionsparameter für den Nutzer zu erhalten, wobei das neuronale Netz eingerichtet ist, auf ein gegebenes Bild innerhalb der Vielzahl von Bildern Gewichtungen des neuronalen Netzes anzuwenden, die für den dem gegebenen Bild entsprechenden vordefinierten Winkel spezialisiert sind;
wobei das neuronale Netz eine Vielzahl von Encodern und einen Decoder umfasst, wobei jeder Encoder Gewichtungen des neuronalen Netzes aufweist, die für einen gegebenen vordefinierten Winkel spezialisiert sind, wobei das Verfahren umfasst:
- Bereitstellen jedes Bildes der Vielzahl von Bildern an den Encoder, dessen Gewichtungen des neuronalen Netzes für den diesem Bild entsprechenden vordefinierten Winkel spezialisiert sind, um ansichtsbezogene Merkmale zu erzeugen, und
- Bereitstellen der von jedem Encoder erhaltenen ansichtsbezogenen Merkmale an den Decoder, um die Rekonstruktionsparameter zu erhalten; und
- Rekonstruieren des 3D-Modells des Nutzers aus den Rekonstruktionsparametern.

2. Rekonstruktionsverfahren nach Anspruch 1, umfassend:
- Erfassen eines Videos des Nutzers mittels eines Geräts, das eine Kamera und eine Nutzerschnittstelle umfasst, wobei die Kamera eine optische Achse aufweist, wobei sich der Nutzer und die Kamera während der Erfassung des Videos relativ zueinander bewegen, wobei das Gerät eingerichtet ist, über die Nutzerschnittstelle eine Positionierungsanleitung bereitzustellen, um die Kamera in einem gegebenen Abstand zum Nutzer mit einem gesteuerten vertikalen Winkel relativ zur optischen Achse der Kamera und/oder mit einer gegebenen Kameraneigung zu positionieren, wobei die Kameraneigung von einer Trägheitsmesseinheit der Kamera erhalten wird,
- Extrahieren der Vielzahl von Bildern aus dem Video.

3. Rekonstruktionsverfahren nach Anspruch 1 oder 2, umfassend das Ableiten eines Netzes aus den Rekonstruktionsparametern und das Erzeugen einer Textur auf Basis mindestens eines Bildes der Vielzahl von Bildern, wobei das mindestens eine Bild einem gegebenen vordefinierten Winkel entspricht, wobei das Erzeugen der Textur umfasst:
- Erhalten der Position eines oder mehrerer interessierender Punkte in einem virtuellen Bild des Netzes, betrachtet aus dem gegebenen vordefinierten Winkel,
- Erfassen einer oder mehrerer Orientierungspunkte in dem mindestens einen Bild, die dem einen oder den mehreren interessierenden Punkten entsprechen, und Registrieren des mindestens einen Bildes auf dem virtuellen Bild auf Basis der Orientierungspunkte, um mindestens ein registriertes Bild zu erhalten,
- Erzeugen der Textur aus dem mindestens einen registrierten Bild.

4. Rekonstruktionsverfahren nach Anspruch 3, wobei die Textur aus zwei oder mehr Bildern innerhalb der Vielzahl von Bildern erzeugt wird, einschließlich mindestens eines registrierten Bildes, und wobei das Erzeugen der Textur ferner umfasst:
- Reprojizieren der zwei oder mehr Bilder auf das Netz, um zwei oder mehr reprojizierte Bilder zu erhalten,
- Definieren einer Verschmelzungsgewichtskarte für jedes der zwei oder mehr reprojizierten Bilder,
- Verschmelzen der zwei oder mehr reprojizierten Bilder durch Anwenden der für jedes der zwei oder mehr reprojizierten Bilder definierten Verschmelzungsgewichtskarte,
wobei für einen Punkt des 3D-Modells das für ein gegebenes reprojiziertes Bild zugewiesene Verschmelzungsgewicht ist:
- entweder vordefiniert in Abhängigkeit von der Position des Punktes auf dem 3D-Modell, oder
- erhalten als eine ansteigende Funktion der Ausrichtung zwischen einer Senkrechten zum 3D-Modell an dem Punkt und dem Blickwinkel, der dem reprojizierten Bild entspricht.

5. Rekonstruktionsverfahren nach Anspruch 1 oder 2, umfassend das Erzeugen einer Textur aus zwei oder mehr Bildern innerhalb der Vielzahl von Bildern, wobei das Erzeugen der Textur umfasst:
- Reprojizieren der zwei oder mehr Bilder auf das Netz, um zwei oder mehr reprojizierte Bilder zu erhalten,
- Definieren einer Verschmelzungsgewichtskarte für jedes der zwei oder mehr reprojizierten Bilder,
- Verschmelzen der zwei oder mehr reprojizierten Bilder durch Anwenden der für jedes der zwei oder mehr reprojizierten Bilder definierten Verschmelzungsgewichtskarte,
wobei für einen Punkt des 3D-Modells das für ein gegebenes reprojiziertes Bild zugewiesene Verschmelzungsgewicht ist:
- entweder vordefiniert in Abhängigkeit von der Position des Punktes auf dem 3D-Modell, oder
- erhalten als eine ansteigende Funktion der Ausrichtung zwischen einer Senkrechten zum 3D-Modell an dem Punkt und dem Blickwinkel, der dem reprojizierten Bild entspricht.

6. Rekonstruktionsverfahren nach einem der Ansprüche 4 oder 5, wobei das Verschmelzen über eine Laplace-Pyramiden-Verschmelzung durchgeführt wird.

7. Rekonstruktionsverfahren nach einem der Ansprüche 3 bis 6, wobei das Erzeugen der Textur das Entfernen unerwünschter Schatten und/oder Glanzlichter aus einem oder mehreren Bereichen der Textur umfasst.

8. Rekonstruktionsverfahren nach einem der Ansprüche 1 bis 7, wobei die spezialisierten Gewichtungen des neuronalen Netzes durch Trainieren des neuronalen Netzes mit einem Trainingsdatensatz erhalten werden, der Trainingsbilder umfasst, die Ansichten eines oder mehrerer Menschen aus jedem der vorbestimmten Winkel oder aus Variationen um jeden der vorbestimmten Winkel entsprechen.

9. Rekonstruktionsverfahren nach Anspruch 8, wobei die Trainingsbilder Trainingsbilder umfassen, die Ansichten eines oder mehrerer synthetischer Menschen entsprechen.

10. Trainingsverfahren zum Trainieren eines neuronalen Netzes zur Verwendung in einem Rekonstruktionsverfahren nach einem der Ansprüche 1 bis 7, wobei das neuronale Netz mit einem Trainingsdatensatz trainiert wird, der Trainingsbilder umfasst, die Ansichten eines oder mehrerer Menschen aus jedem der vorbestimmten Winkel oder aus Variationen um jeden der vorbestimmten Winkel entsprechen.

11. Trainingsverfahren nach Anspruch 10, wobei die Trainingsbilder Trainingsbilder umfassen, die Ansichten eines oder mehrerer synthetischer Menschen entsprechen.

12. Trainingsverfahren nach einem der Ansprüche 10 oder 11, wobei der Trainingsdatensatz Ground-Truth-Rekonstruktionsparameter umfasst, die den Trainingsbildern zugeordnet sind, und wobei die Gewichtungen des neuronalen Netzes durch Minimieren einer Verlustfunktion mit einem Term bestimmt werden, der auf den Unterschieden zwischen den Ground-Truth-Rekonstruktionsparametern und den vom neuronalen Netz für die Trainingsbilder erhaltenen geschätzten Rekonstruktionsparametern basiert.

13. Trainingsverfahren nach einem der Ansprüche 10 bis 12, wobei der Trainingsdatensatz Ground-Truth-Netzscheitelpunkte umfasst, die den Trainingsbildern zugeordnet sind, und wobei die Gewichtungen des neuronalen Netzes durch Minimieren einer Verlustfunktion mit einem Term bestimmt werden, der auf den Unterschieden zwischen den Positionen der Ground-Truth-Netzscheitelpunkte und der geschätzten Netzscheitelpunkte, die aus den geschätzten Rekonstruktionsparametern abgeleitet werden, basiert.

14. Trainingsverfahren nach Anspruch 13, wobei ein Netzscheitelpunkt einer Position auf einem Netz zugeordnet ist, und wobei die Verlustfunktion einen Term aufweist, der eine Verlustgewichtung auf die Differenz zwischen den Positionen eines gegebenen Ground-Truth-Netzscheitelpunkts und eines gegebenen geschätzten Netzscheitelpunkts anwendet, wobei die Verlustgewichtung von der Position des gegebenen Ground-Truth-Netzscheitelpunkts abhängt.

15. Trainingsverfahren nach Anspruch 13, wobei ein Netzscheitelpunkt einem oder mehreren Netzbereichen zugeordnet ist, und wobei die Verlustfunktion einen Term aufweist, der eine Verlustgewichtung auf die Differenz zwischen den Positionen eines gegebenen Ground-Truth-Netzscheitelpunkts und eines gegebenen geschätzten Netzscheitelpunkts anwendet, wobei die Verlustgewichtung von dem einen oder den mehreren Netzbereichen abhängt, zu denen der gegebene Ground-Truth-Netzscheitelpunkt gehört.

16. Rekonstruktionsverfahren nach einem der Ansprüche 1 bis 9, oder Trainingsverfahren nach einem der Ansprüche 10 bis 1, wobei die Rekonstruktionsparameter Parameter eines morphbaren Modells sind.

17. Computerprogrammprodukt, umfassend Programmanweisungen, die bei Ausführung durch eine Vorrichtung die Vorrichtung veranlassen, ein Rekonstruktionsverfahren nach einem der Ansprüche 1 bis 10 oder 16, oder ein Trainingsverfahren nach einem der Ansprüche 10 bis 16 auszuführen.

18. Vorrichtung, umfassend Mittel zum Implementieren eines Rekonstruktionsverfahrens nach einem der Ansprüche 1 bis 10 oder 16, oder des Trainingsverfahrens nach einem der Ansprüche 10 bis 16.

## Revendications

1. Procédé de reconstruction pour reconstruire un modèle 3D d'un utilisateur, comprenant :
- la fourniture d'une pluralité d'images, correspondant à une pluralité de vues de l'utilisateur depuis une pluralité d'angles prédéfinis, à un réseau de neurones pour obtenir des paramètres de reconstruction pour l'utilisateur, le réseau de neurones étant configuré pour appliquer, à une image donnée parmi la pluralité d'images, des poids du réseau de neurones spécialisés pour l'angle prédéfini correspondant à ladite image donnée ;
dans lequel le réseau de neurones comprend une pluralité de codeurs et un décodeur, chaque codeur ayant des poids du réseau de neurones spécialisés pour un angle prédéfini donné, le procédé comprenant :
- la fourniture de chaque image de la pluralité d'images au codeur dont les poids du réseau de neurones sont spécialisés pour l'angle prédéfini correspondant à ladite image, pour générer des caractéristiques par vue, et
- la fourniture des caractéristiques par vue obtenues par chaque codeur au décodeur, pour obtenir les paramètres de reconstruction ; et
- la reconstruction du modèle 3D de l'utilisateur à partir des paramètres de reconstruction.

2. Procédé de reconstruction selon la revendication 1, comprenant :
- l'acquisition d'une vidéo de l'utilisateur au moyen d'un dispositif comprenant une caméra et une interface utilisateur, la caméra ayant un axe optique, l'utilisateur et la caméra étant en mouvement relatif l'un par rapport à l'autre pendant l'acquisition de la vidéo, le dispositif étant configuré pour fournir, par l'intermédiaire de l'interface utilisateur, un guidage de positionnement pour positionner la caméra à une distance donnée de l'utilisateur avec un angle vertical contrôlé par rapport à l'axe optique de la caméra et/ou avec une inclinaison de caméra donnée, l'inclinaison de caméra étant obtenue à partir d'une unité de mesure inertielle de la caméra,
- l'extraction de la pluralité d'images à partir de la vidéo.

3. Procédé de reconstruction selon la revendication 1 ou 2, comprenant la dérivation d'un maillage à partir des paramètres de reconstruction et la génération d'une texture sur la base d'au moins une image de la pluralité d'images, cette image ou ces images correspondant à un angle prédéfini donné, dans lequel la génération de la texture comprend :
- l'obtention de la position d'un ou plusieurs points d'intérêt dans une image virtuelle du maillage vue depuis ledit angle prédéfini donné,
- la détection, dans cette image ou ces images, d'un ou de plusieurs points de repère correspondant au ou aux points d'intérêt, et le recalage de cette image ou de ces images sur l'image virtuelle sur la base de ces points de repère, pour obtenir au moins une image recalée,
- la génération de la texture à partir de cette image recalée ou de ces images recalées.

4. Procédé de reconstruction selon la revendication 3, dans lequel la texture est générée à partir de deux ou plusieurs images parmi la pluralité d'images, incluant au moins une image recalée, et dans lequel la génération de la texture comprend en outre :
- la reprojection des deux ou plusieurs images sur le maillage pour obtenir deux ou plusieurs images reprojetées,
- la définition d'une carte de poids de fusion pour chacune des deux ou plusieurs images reprojetées,
- la fusion des deux ou plusieurs images reprojetées en appliquant la carte de poids de fusion définie pour chacune des deux ou plusieurs images reprojetées,
dans lequel, pour un point du modèle 3D, le poids de fusion attribué pour une image reprojetée donnée est :
- soit prédéfini en fonction de la position du point sur le modèle 3D,
- soit obtenu comme une fonction croissante de l'alignement entre une perpendiculaire au modèle 3D audit point et l'angle de vue correspondant à l'image reprojetée.

5. Procédé de reconstruction selon la revendication 1 ou 2, comprenant la génération d'une texture à partir de deux ou plusieurs images parmi la pluralité d'images, dans lequel la génération de la texture comprend :
- la reprojection des deux ou plusieurs images sur le maillage pour obtenir deux ou plusieurs images reprojetées,
- la définition d'une carte de poids de fusion pour chacune des deux ou plusieurs images reprojetées,
- la fusion des deux ou plusieurs images reprojetées en appliquant la carte de poids de fusion définie pour chacune des deux ou plusieurs images reprojetées,
dans lequel, pour un point du modèle 3D, le poids de fusion attribué pour une image reprojetée donnée est :
- soit prédéfini en fonction de la position du point sur le modèle 3D,
- soit obtenu comme une fonction croissante de l'alignement entre une perpendiculaire au modèle 3D audit point et l'angle de vue correspondant à l'image reprojetée.

6. Procédé de reconstruction selon l'une quelconque des revendications 4 ou 5, dans lequel la fusion est réalisée par une fusion par pyramide laplacienne.

7. Procédé de reconstruction selon l'une quelconque des revendications 3 à 6, dans lequel la génération de la texture comprend la suppression d'ombres et/ou de reflets indésirables d'une ou plusieurs zones de la texture.

8. Procédé de reconstruction selon l'une quelconque des revendications 1 à 7, dans lequel les poids spécialisés du réseau de neurones sont obtenus en entraînant le réseau de neurones avec un ensemble de données d'entraînement comprenant des images d'entraînement correspondant à des vues d'un ou plusieurs humains depuis chacun des angles prédéterminés ou depuis des variations autour de chacun des angles prédéterminés.

9. Procédé de reconstruction selon la revendication 8, dans lequel les images d'entraînement comprennent des images d'entraînement correspondant à des vues d'un ou plusieurs humains synthétiques.

10. Procédé d'entraînement pour entraîner un réseau de neurones destiné à être utilisé dans un procédé de reconstruction selon l'une quelconque des revendications 1 à 7, dans lequel le réseau de neurones est entraîné avec un ensemble de données d'entraînement comprenant des images d'entraînement correspondant à des vues d'un ou plusieurs humains depuis chacun des angles prédéterminés ou depuis des variations autour de chacun des angles prédéterminés.

11. Procédé d'entraînement selon la revendication 10, dans lequel les images d'entraînement comprennent des images d'entraînement correspondant à des vues d'un ou plusieurs humains synthétiques.

12. Procédé d'entraînement selon l'une quelconque des revendications 10 ou 11, dans lequel l'ensemble de données d'entraînement comprend des paramètres de reconstruction de vérité terrain associés aux images d'entraînement et dans lequel les poids du réseau de neurones sont déterminés en minimisant une fonction de perte avec un terme basé sur les différences entre les paramètres de reconstruction de vérité terrain et les paramètres de reconstruction estimés obtenus par le réseau de neurones pour les images d'entraînement.

13. Procédé d'entraînement selon l'une quelconque des revendications 10 à 12, dans lequel l'ensemble de données d'entraînement comprend des sommets de maillage de vérité terrain associés aux images d'entraînement, et dans lequel les poids du réseau de neurones sont déterminés en minimisant une fonction de perte avec un terme basé sur les différences entre les positions des sommets de maillage de vérité terrain et des sommets de maillage estimés dérivés des paramètres de reconstruction estimés.

14. Procédé d'entraînement selon la revendication 13, dans lequel un sommet de maillage est associé à une position sur un maillage, et dans lequel la fonction de perte comporte un terme qui applique une pondération de perte à la différence entre les positions d'un sommet de maillage de vérité terrain donné et d'un sommet de maillage estimé donné, la pondération de perte dépendant de la position du sommet de maillage de vérité terrain donné.

15. Procédé d'entraînement selon la revendication 13, dans lequel un sommet de maillage est associé à une ou plusieurs zones de maillage, et dans lequel la fonction de perte comporte un terme qui applique une pondération de perte à la différence entre les positions d'un sommet de maillage de vérité terrain donné et d'un sommet de maillage estimé donné, la pondération de perte dépendant de la ou des zones de maillage auxquelles appartient le sommet de maillage de vérité terrain donné.

16. Procédé de reconstruction selon l'une quelconque des revendications 1 à 9, ou procédé d'entraînement selon l'une quelconque des revendications 10 à 1, dans lequel les paramètres de reconstruction sont des paramètres de modèle morphable.

17. Produit programme d'ordinateur comprenant des instructions de programme qui, lorsqu'elles sont exécutées par un appareil, amènent l'appareil à exécuter un procédé de reconstruction selon l'une quelconque des revendications 1 à 10 ou 16, ou un procédé d'entraînement selon l'une quelconque des revendications 10 à 16.

18. Appareil comprenant des moyens pour mettre en œuvre un procédé de reconstruction selon l'une quelconque des revendications 1 à 10 ou 16, ou le procédé d'entraînement selon l'une quelconque des revendications 10 à 16.
